# EUROPEAN PATENT APPLICATION

(11) **EP 3 450 769 A1**
(43) Date of publication of application: **06.03.2019**
(21) Application number: 18192548.8
(22) Date of filing: 04.09.2018
(51) Int. Cl.: F04D 29/58, F04D 29/66, F04D 25/06, F04D 25/08, F04D 29/44, F04D 29/54, F04D 29/40

(54) **MOTOR MODULE AND VACUUM CLEANER**

(30) Priority: 05.09.2017 JP 2017170181
(71) Applicant: Nidec Corporation, Kyoto-shi, Kyoto 601-8205 (JP)
(72) Inventor: SAKUMA, Yuuichi, Kyoto, 601-8205 (JP); MURAKAMI, Jun, Kyoto, 601-8205 (JP)
(74) Representative: Zimmermann, Tankred Klaus

(57) **Abstract**

A motor module (10) includes a motor (31), a fan (32), and a casing (20) which accommodates the motor (31) and the fan (32) therein. The casing (20) includes a tubular main body portion (21), an intake port (211), an exhaust port (212), a flow passage (40), and a partition unit (60). The flow passage (40) includes a fan accommodating unit (41), a first muffling chamber (401) that communicates with the fan accommodating unit (41) via a first communication path (421), a second muffling chamber (402) that communicates with the first muffling chamber (401) via a second communication path (423), and a third muffling chamber (403) that communicates with either one of the first muffling chamber (401) or the second muffling chamber (402) via a third communication path (441), and communicates with the exhaust port (212).

## Description

### Field of the Invention

The present disclosure relates to a motor module and a vacuum cleaner including a motor module.

### Description of the Related ArL

In the related art, a motor and a fan are mounted on a device that requires a suction force of a vacuum cleaner or the like. In recent years, with an increase in number of multi-dwelling houses and the like, suppression of noise caused by an airflow generated by rotation of the fan inside the vacuum cleaner has proceeded.

The vacuum cleaner of the related art opens and closes an air duct in accordance with the exhaust pressure from the electric blower on the inside of the main body case. In addition, noise is reduced by forming a resonance type muffler and an expansion type muffler while switching the mufflers. However, in the structure of the publication, since a mechanism for switching the resonance type muffler and the expansion type muffler to each other is included, the structure becomes complicated. Therefore, there is a concern that the number of components increases and the cost increases. In addition, there is a concern that the assembling process becomes complicated and production efficiency decrease.

### SUMMARY OF THE INVENTION

An object of the disclosure is to provide a structure capable of reducing noise while suppressing the number of components in a motor module of a vacuum cleaner including a motor and a fan.

This object is achieved by a motor module according to claim 1.

According to an aspect of the disclosure, there is provided a motor module including: a motor having a rotating unit that rotates around a rotating axis; a fan which is disposed on one side of the motor in an axial direction and rotates together with the rotating unit; and a casing which accommodates the motor and the fan therein, in which the casing includes a tubular main body portion that extends in the axial direction, an intake port disposed on one side of the fan in the axial direction, one or a plurality of exhaust ports disposed on the other side of the fan in the axial direction and on an outer side of the motor in a radial direction, a flow passage which is a space that connects the intake port and the exhaust port to each other between the main body portion and the motor, and a partition unit which is disposed on an inside of the flow passage and partitions the flow passage, in which the flow passage includes a fan accommodating unit in which the fan is accommodated and which directly communicates with the intake port, a first muffling chamber that communicates with the fan accommodating unit via a first communication path, a second muffling chamber that communicates with the first muffling chamber via a second communication path and directly or indirectly communicates with the exhaust port, and a third muffling chamber that communicates with either one of the first muffling chamber or the second muffling chamber via a third communication path, and directly or indirectly communicates with the exhaust port, in which a flow passage sectional area of the first muffling chamber is greater than a flow passage sectional area of the first communication path, in which a flow passage sectional area of the second muffling chamber is greater than a flow passage sectional area of the second communication path, and in which a flow passage sectional area of the third muffling chamber is greater than a flow passage sectional area of the third communication path.

According to the aspect of the disclosure, a first expansion type muffler, a second expansion type muffler, and a third expansion type muffler are formed on the inside of the motor module. The first expansion type muffler is formed by the first muffling chamber that communicates with the fan accommodating unit via the first communication path. In addition, the second expansion type muffler is formed by the second muffling chamber that communicates with the first muffling chamber via the second communication path. Furthermore, the third expansion type muffler is formed by the third muffling chamber that communicates with either one of the first muffling chamber or the second muffling chamber via the third communication path. The second muffling chamber and the third muffling chamber directly or indirectly communicate with the exhaust port disposed on the outer side of the motor in the radial direction. Accordingly, noise can be efficiently reduced while suppressing the number of components.

### BRIEF DESCRIPTION OF THE DRAWINGS

Fig. 1 is a side view of a vacuum cleaner according to a first embodiment.
Fig. 2 is a sectional view of a motor module according to the first embodiment.
Fig. 3 is a sectional view of a casing according to the first embodiment.
Fig. 4 is a partial sectional view of the casing according to the first embodiment.
Fig. 5 is a partial sectional perspective view of the motor module according to the first embodiment.
Fig. 6 is a sectional view taken along line VI-VI of the motor module according to the first embodiment.
Fig. 7 is a sectional view of a casing according to a modification example.

### DETAILED DESCRIPTION OF THE PREFERRED EMBODIMENTS

An example of a vacuum cleaner having a motor module is disclosed below. In addition, in the disclosure, a direction parallel to a rotating axis of a motor which will be described later is referred to as "axial direction", a direction orthogonal to the rotating axis of the motor is referred to as "radial direction", and a direction along the circumference around the rotating axis of the motor is referred to as "circumferential direction", respectively. In addition, in the disclosure, the shape and positional relationship of each portion will be described with respect to a rechargeable battery that will be described later considering a handle portion side as an upper side. However, due to the definition of the up-down direction, there is no intention to limit the orientation of the motor module during manufacture and use. Further, in the disclosure, "parallel direction" also includes a substantially parallel direction. Further, in the disclosure, "orthogonal direction" also includes a substantially orthogonal direction.

### 1. First Embodiment

### 1-1. Configuration of Vacuum Cleaner

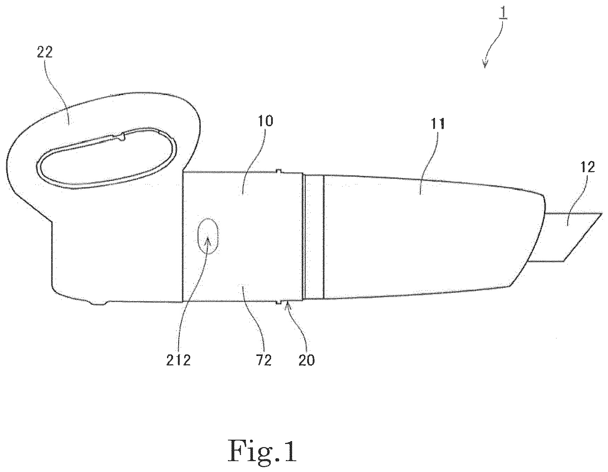

Fig. 1 is a side view of a vacuum cleaner 1 according to a first embodiment. As illustrated in Fig. 1, the vacuum cleaner 1 has a motor module 10, a dust separating unit 11, and a nozzle 12. The vacuum cleaner 1 is a so-called handy type vacuum cleaner.

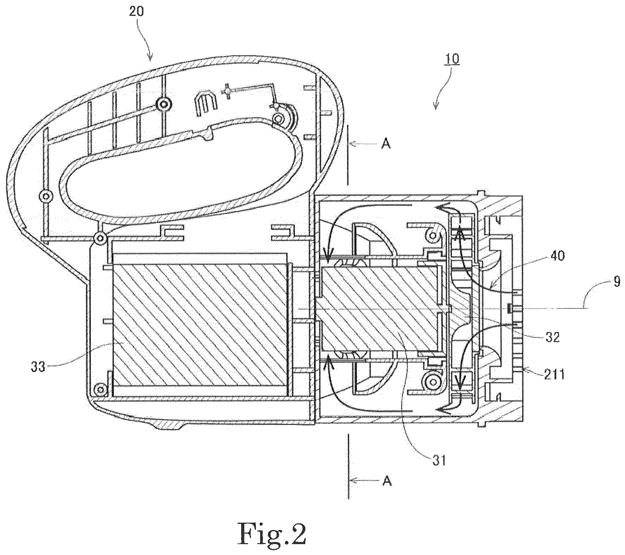

Fig. 2 is a sectional view of the motor module 10. As illustrated in Fig. 2, the motor module 10 includes a casing 20, a motor 31, a fan 32, and a rechargeable battery 33.

The casing 20 accommodates the motor 31, the fan 32, and the rechargeable battery 33 therein, respectively. The casing 20 includes an intake port 211 and an exhaust port 212 which will be described later. The intake port 211 is disposed on one side of the fan 32 in the axial direction and communicates with the dust separating unit 11 and a space inside the casing 20 in which the fan 32 is accommodated. The exhaust port 212 is provided on a side surface of the casing 20. In addition, the casing 20 forms a flow passage 40 which is a space that connects the intake port 211 and the exhaust port 212 to each other on the inside thereof. The detailed configuration of the casing 20 will be described later.

The motor 31 is a brushless motor. The motor 31 has a rotating unit that rotates around a rotating axis 9. The fan 32 is disposed on one side of the motor 31 in the axial direction. Further, the fan 32 rotates together with the rotating unit of the motor 31. The fan 32 is a so-called centrifugal fan that generates an airflow oriented toward the outer side in the radial direction by rotation. Accordingly, the fan 32 generates the airflow that flows from the intake port 211 to the exhaust port 212 in the flow passage 40 of the casing 20. The rechargeable battery 33 supplies driving power to the motor 31.

The dust separating unit 11 is disposed on one side of the motor module 10 in the axial direction. A nozzle 12 is an intake head disposed on one side of the dust separating unit 11 in the axial direction. The dust separating unit 11 separates dust and dirt contained in the airflow suctioned from the nozzle 12, from the airflow. In addition, the dust separating unit 11 may separate dust and dirt by a paper pack or may separate dust and dirt by a cyclone separator.

When the vacuum cleaner 1 is driven, the motor 31 is driven and the fan 32 rotates. In accordance with this, the airflow that is oriented toward the exhaust port 212 through the inside of the dust separating unit 11, the intake port 211, and the inside of the motor module 10, from the nozzle 12, is generated. Accordingly, dust and dirt are suctioned together with the airflow from the nozzle 12. Dust and dirt are removed in the dust separating unit 11 from the airflow that flows in from the nozzle 12. In addition, the airflow from which the dust and dirt have been removed passes through the motor module 10 and is discharged from the exhaust port 212.

### 1-2. Configuration of Casing

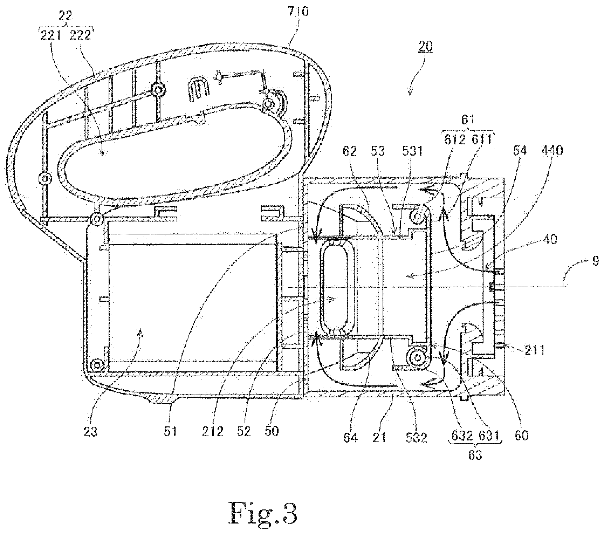

Next, a specific configuration of the casing 20 will be described later. Hereinafter, Figs. 1 and 2 will be appropriately referred to together with Figs. 3 to 6 which will be described later.

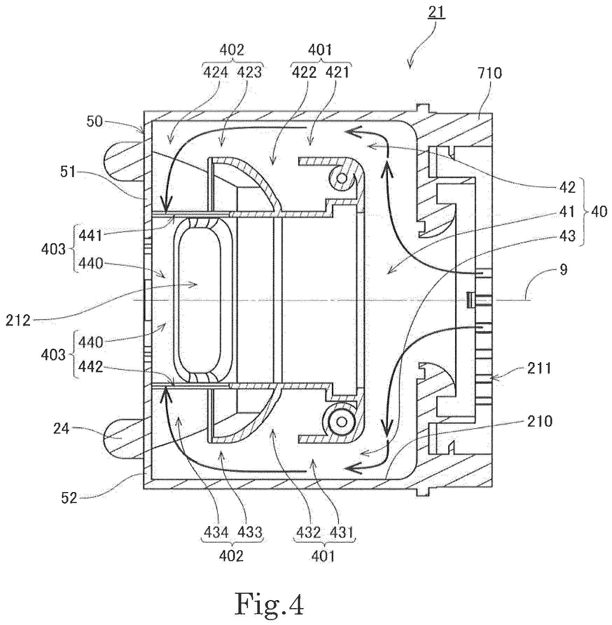

Fig. 3 is a sectional view of the casing 20. Fig. 4 is a partial sectional view of a part having the flow passage 40 that connects the intake port 211 and the exhaust port 212 to each other in the casing 20. As illustrated in Fig. 3, the casing 20 includes the main body portion 21, a handle portion 22, and a rechargeable battery accommodating unit 23.

The main body portion 21 is a tubular part that extends in the axial direction. As illustrated in Figs. 2 and 3, the intake port 211 is provided on one side of the fan 32 in the axial direction in the main body portion 21. In addition, the exhaust port 212 is provided on the other side of the fan 32 in the axial direction and on the outer side of the motor 31 in the radial direction in the main body portion 21. The exhaust port 212 is a through-hole that communicates with the inside and the outside of the casing 20. In addition, between the inner wall 210 of the main body portion 21 and the motor 31, the flow passage 40 which is a space that connects the intake port 211 and the exhaust port 212 to each other is formed.

On the other side of the main body portion 21 in the axial direction in the casing 20, the handle portion 22 and the rechargeable battery accommodating unit 23 are provided. The handle portion 22 and the rechargeable battery accommodating unit 23 are connected to the main body portion 21 by, for example, a connecting member 24 illustrated in Fig. 4. Further, the handle portion 22 is disposed above the rechargeable battery accommodating unit 23. Here, the handle portion 22 is configured with a handle hole 221 that penetrates in a left-right direction perpendicular to the axial direction and the up-down direction and a gripping unit 222 that extends in the axial direction above the handle hole 221. The rechargeable battery accommodating unit 23 accommodates the rechargeable battery 33 therein.

Further, the casing 20 includes a wall portion 50 for partitioning the space including the flow passage 40 therein, a motor covering unit 53, and a fan covering unit 54, and a partition unit 60.

The wall portion 50 partitions the internal space of the casing 20 into the flow passage 40 and a part other than the flow passage 40. Accordingly, for example, generation of noise due to the airflow that strikes the parts, such as the handle portion 22, the rechargeable battery accommodating unit 23, and the rechargeable battery 33, is suppressed. Further, regardless of the shapes of the handle portion 22, the rechargeable battery accommodating unit 23, and the rechargeable battery 33, the flow passage resistance in the flow passage 40 and the muffling effect which will be described later can be kept constant. The wall portion 50 is configured with an upper wall portion 51 and a lower wall portion 52. The upper wall portion 51 is a part positioned above the rotating axis 9 in the wall portion 50. The lower wall portion 52 is a part positioned below the rotating axis 9 in the wall portion 50.

The motor covering unit 53 is a member disposed between at least a part of the motor 31 accommodated on the inside of the casing 20 and the inner wall 210 of the main body portion 21. The motor covering unit 53 extends in a plate-like shape in the axial direction. In addition, the motor covering unit 53 partitions the flow passage 40 such that at least a part of the flow passage 40 forms a shape closed by the inner wall 210 and the motor covering unit 53 of the main body portion 21 when viewed from one side in the axial direction. In addition, the motor covering unit 53 is configured with an upper motor covering unit 531 and a lower motor covering unit 532. The upper motor covering unit 531 is a part that extends in the axial direction above the rotating axis 9. The lower motor covering unit 532 is a part that extends in the axial direction below the rotating axis 9.

The fan covering unit 54 is a plate-like member that expands in the radial direction between the motor 31 and the fan 32 in the axial direction and further on the outer side in the radial direction than the connecting location between the rotating unit of the motor 31 and the fan 32.

The partition unit 60 is a plate-like member which is disposed on the inside of the flow passage 40 and partitions the flow passage 40. The partition unit 60 has an upper first partition unit 61, an upper second partition unit 62, a lower first partition unit 63, and a lower second partition unit 64. The upper first partition unit 61 has an upper first plate portion 611 and an upper first bent portion 612. The upper first plate portion 611 further expands to the outer side in the radial direction from an end portion on the outer side of the fan covering unit 54 in the radial direction. In other words, the upper first plate portion 611 expands substantially perpendicularly to the axial direction on one side of the motor 31 in the axial direction and on the other side of the fan 32 in the axial direction. The upper first bent portion 612 extends from the end portion on the outer side of the upper first plate portion 611 in the radial direction to the other side in the axial direction. The upper second partition unit 62 extends from a part of the motor covering unit 53 to the outer side in the radial direction and the other side in the axial direction, on the other side of the upper first partition unit 61 in the axial direction and on one side of the upper wall portion 51 in the axial direction. The lower first partition unit 63 has a shape obtained by vertically reversing the upper first partition unit 61. The lower first partition unit 63 has a lower first plate portion 631 and a lower first bent portion 632. The lower second partition unit 64 has a shape obtained by vertically reversing the upper second partition unit 62 considering the rotating axis 9 as a boundary.

As illustrated in Figs. 3 and 4, by providing the wall portion 50, the motor partition unit 53, the fan covering unit 54, and the partition unit 60, a fan accommodating unit 41 that accommodates the fan 32 therein, and an upper flow passage 42 and a lower flow passage 43 that extend from the fan accommodating unit 41 to the other side in the axial direction, and a motor accommodating unit are formed in the flow passage 40. The details of the flow passages will be described below.

First, the fan accommodating unit 41 is formed by partitioning the upper first plate portion 611, the lower first plate portion 631, and the fan covering unit 54 in the axial direction on the inside of the casing 20 and on the other side of the intake port 211 in the axial direction. The fan accommodating unit 41 directly communicates with the intake port 211. Further, as described above, the airflow that is oriented toward the outer side in the radial direction is generated by the rotation of the fan 32 accommodated in the fan accommodating unit 41. At this time, the flow passage 40 of the embodiment branches to the upper flow passage 42 and the lower flow passage 43 on the downstream side of the fan 32. In other words, on the inside of the casing 20, the upper first plate portion 611, the lower first plate portion 631, and the fan covering unit 54 are provided on the other side of the fan accommodating unit 41 in the axial direction. Therefore, the airflow advances further to the other side in the axial direction via an upper first communication path 421 which is a space above the upper first bent portion 612 of the upper first partition unit 61, or a lower first communication path 431 which is a space below the lower first bent portion 632 of the lower first partition unit 63. In addition, the upper first communication path 421 is a space that communicates in the axial direction between the upper first partition unit 61 and the inner wall 210 of the main body portion 21. The lower first communication path 431 is a space that communicates in the axial direction between the lower first partition unit 63 and the inner wall 210 of the main body portion 21.

Next, on the other side of the upper first communication path 421 in the axial direction, an upper first muffling chamber 422 that communicates with the fan accommodating unit 41 via the upper first communication path 421 is formed. In other words, the fan accommodating unit 41 and the upper first muffling chamber 422 are partitioned from each other in the axial direction by the upper first partition unit 61 disposed therebetween. The upper first muffling chamber 422 is a space positioned on the other side of the upper first partition unit 61 in the axial direction and the upper first communication path 421, on the upper side of the upper motor covering unit 531, on the inner side of the inner wall 210 in the radial direction of the main body portion 21, and on one side of the upper second partition unit 62 in the axial direction and an upper second communication path 423 which will be described later. In addition, on the other side of the lower first communication path 431 in the axial direction, a lower first muffling chamber 432 that communicates with the fan accommodating unit 41 via the lower first communication path 431 is formed. In other words, the fan accommodating unit 41 and the lower first muffling chamber 432 are partitioned from each other in the axial direction by the lower first partition unit 63 disposed therebetween. The lower first muffling chamber 432 is a space positioned on the other side of the lower first partition unit 63 in the axial direction and the lower first communication path 431, on the lower side of the lower motor covering unit 532, on the inner side of the inner wall 210 in the radial direction of the main body portion 21, and on one side of the lower second partition unit 64 in the axial direction and a lower second communication path 433 which will be described later.

In the upper flow passage 42, the airflow that has reached the upper first muffling chamber 422 via the upper first communication path 421 advances further to the other side in the axial direction via the upper second communication path 423 which is a space above the upper second partition unit 62. The upper second communication path 423 is a space that communicates with the upper second partition unit 62 in the axial direction with the inner wall 210 of the main body portion 21 therebetween. Further, in the lower flow passage 43, the airflow that has reached the lower first muffling chamber 432 via the lower first communication path 431 further advances on the other side in the axial direction via the lower second communication path 433 which is a space below the lower second partition unit 64. The lower second communication path 433 is a space that communicates with the lower second partition unit 64 in the axial direction with the inner wall 210 of the main body portion 21 therebetween.

An upper second muffling chamber 424 that communicates with the upper first muffling chamber 422 via the upper second communication path 423 is formed on the other side of the upper second communication path 423 in the axial direction. The upper second muffling chamber 424 is a space positioned on the other side of the upper second partition unit 62 in the axial direction and the upper second communication path 423, on the upper side of the upper motor covering unit 531, on the inner side of the inner wall 210 of the main body portion 21 in the radial direction, and on one side of the upper wall portion 51 in the axial direction. In addition, a lower second muffling chamber 434 that communicates with the lower first muffling chamber 432 via the lower second communication path 433 is formed on the other side of the lower second communication path 433 in the axial direction. The lower second muffling chamber 434 is a space positioned on the other side of the lower second partition unit 64 and the lower second communication path 433 in the axial direction, on the lower side of the lower motor covering unit 532, on the inner side of the inner wall 210 of the main body portion 21 in the radial direction, and on one side of the lower wall portion 52 in the axial direction. In addition, the upper second muffling chamber 424 and the lower second muffling chamber 434 indirectly communicate with the exhaust port 212 provided in the third muffling chamber 440 (which will be described later), respectively.

Furthermore, on the other side of the fan accommodating unit 41 in the axial direction, a third muffling chamber 440 is formed. The third muffling chamber 440 is a space positioned on the other side of the fan covering unit 54 in the axial direction, on the lower side of the upper motor covering unit 531, on the upper side of the lower motor covering unit 532, and on one side of the wall portion 50 in the axial direction. In the embodiment, a through-hole is provided between at least a part of the end portion on the other side of the upper motor covering unit 531 and the upper wall portion 51 in the axial direction. An upper third communication path 441 that communicates with the upper second muffling chamber 424 and the third muffling chamber 440 is formed by the through-hole. The third muffling chamber 440 communicates with the upper second muffling chamber 424 via the upper third communication path 441. The airflow that has reached the upper second muffling chamber 424 advances to the third muffling chamber 440 via the upper third communication path 441. In addition, a through-hole is provided between at least a part of the end portion on the other side of the lower motor covering unit 532 and the lower wall portion 52 in the axial direction. A lower third communication path 442 that communicates with the lower second muffling chamber 434 and the third muffling chamber 440 is formed by the through-hole. The third muffling chamber 440 communicates with the lower second muffling chamber 434 via the lower third communication path 442. The airflow that has reached the lower second muffling chamber 434 advances to the third muffling chamber 440 via the lower third communication path 442.

In the embodiment, the exhaust port 212 described above is provided in the third muffling chamber 440. The third muffling chamber 440 communicates directly with the exhaust port 212. In addition, the third muffling chamber 440 may communicate indirectly with the exhaust port 212 via another space. The airflow in the upper flow passage 42 and the airflow in the lower flow passage 43 merge with each other in the third muffling chamber 440 and are discharged to the outside of the motor module 10 via the exhaust port 212.

As described above, when the motor 31 is driven to rotate the fan 32, the fan 32 generates the airflow oriented from the upper part of the fan 32 toward the outer side of the fan 32 in the radial direction. Accordingly, on the inside of the fan accommodating unit 41, the airflow oriented from the intake port 211 toward the upper flow passage 42 and the lower flow passage 43 via the first communication paths 421 and 431 is generated. In addition, the airflow is discharged from the exhaust port 212 to the outside of the motor module 10 through the first muffling chambers 422 and 432, the second communication paths 423 and 433, the second muffling chambers 424 and 434, the third communication path 441 and 442, and the third muffling chamber 440.

Here, the flow passage sectional area of the upper first muffling chamber 422 is greater than the flow passage sectional area of the upper first communication path 421. The flow passage sectional area of the lower first muffling chamber 432 is greater than the flow passage sectional area of the lower first communication path 431. Accordingly, the upper first communication path 421 and the upper first muffling chamber 422, and the lower first communication path 431 and the lower first muffling chamber 432 configure a first expansion type muffler 401, respectively. In addition, the flow passage sectional area of the upper second muffling chamber 424 is greater than the flow passage sectional area of the upper second communication path 423. The flow passage sectional area of the lower second muffling chamber 434 is greater than the flow passage sectional area of the lower second communication path 433. Accordingly, the upper second communication path 423 and the upper second muffling chamber 424, and the lower second communication path 433 and the lower second muffling chamber 434 configure a second expansion type muffler 402, respectively. Furthermore, the flow passage sectional area of the third muffling chamber 440 is greater than the flow passage sectional area of the upper third communication path 441. The flow passage sectional area of the third muffling chamber 440 is greater than the flow passage sectional area of the lower third communication path 442. Accordingly, the upper third communication path 441 and the third muffling chamber 440, and the lower third communication path 442 and the third muffling chamber 440 configure a third expansion type muffler 403, respectively. In this manner, by disposing three expansion type mufflers 401, 402, and 403 between the fan 32 and the exhaust port 212 respectively in the upper flow passage 42 and the lower flow passage 43, the noise generated in the fan 32 can be substantially reduced. In addition, since the expansion type mufflers can be configured with a simple structure, it is possible to reduce the number of components and suppress cost while efficiently reducing the noise. In addition, assembly workability can be improved, and production efficiency can be enhanced.

In addition, the motor 31 is disposed in the third muffling chamber 440. In other words, the third muffling chamber 440 forms the motor accommodating unit that accommodates the motor 31 therein. Accordingly, it is possible to effectively utilize the limited space on the inside of the motor module 10 and to suppress the increase in size of the motor module 10. Furthermore, since the airflow is generated in the vicinity of the motor 31, an effect of cooling the heat generated in the motor 31 can be obtained.

Further, in the embodiment, since the upper first partition unit 61 has the upper first bent portion 612, the length of the upper first communication path 421 in the axial direction can be increased. By ensuring a pipe length of the upper first communication path 421, the muffling effect of the first expansion type muffler 401 configured with the upper first communication path 421 and the upper first muffling chamber 422 can be improved. Further, by appropriately adjusting the length of the upper first bent portion 612, the length of the upper first communication path 421 can be adjusted. Therefore, the muffling effect of the first expansion type muffler 401 can be finely adjusted, and the muffling performance can be further improved. Further, since the lower first partition unit 63 has the lower first bent portion 632, the length of the lower first communication path 431 in the axial direction can be increased. By ensuring a pipe length of the lower first communication path 431, the muffling effect of the first expansion type muffler 401 configured with the lower first communication path 431 and the lower first muffling chamber 432 can be improved. Further, by appropriately adjusting the length of the lower first bent portion 632, the length of the lower first communication path 431 can be adjusted. Therefore, the muffling effect of the first expansion type muffler 401 can be finely adjusted, and the muffling performance can be further improved.

In addition, since a part of the upper first communication path 421 extends toward the inside of the upper first muffling chamber 422, the first expansion type muffler 401 becomes a muffler with an inner duct. Specifically, a space below the upper first bent portion 612 and above the upper motor covering unit 531 plays a role of the inner duct. Therefore, the space functions as a side branch type muffler (that is, an interference type and resonance type muffler). Therefore, the muffling effect of the first expansion type muffler 401 can be finely adjusted depending on the length of the inner duct, and the muffling performance can be further improved. In addition, since a part of the lower first communication path 431 extends toward the inside of the lower first muffling chamber 432, the first expansion type muffler 401 becomes a muffler with an inner duct. Specifically, a space above the lower first bent portion 632 and below the lower motor covering unit 532 plays a role of the inner duct. Therefore, the space functions as a side branch type muffler (that is, an interference type and resonance type muffler). Therefore, the muffling effect of the first expansion type muffler 401 can be finely adjusted depending on the length of the inner duct, and the muffling performance can be further improved.

In addition, the upper first communication path 421 and the upper second communication path 423 are disposed along the inner wall 210 of the main body portion 21, respectively, and at least a part thereof overlaps each other in the axial direction. In addition, the lower first communication path 431 and the lower second communication path 433 are disposed along the inner wall 210 of the main body portion 21, respectively, and at least a part thereof overlaps each other in the axial direction. Accordingly, the airflow oriented toward the other side in the axial direction along the inner wall 210 of the main body portion 21 generated by the fan 32 is likely to enter the first communication paths 421 and 431 and the second communication paths 423 and 433. In other words, the flow passage resistance in the upper flow passage 42 and the flow passage resistance in the lower flow passage 43 decrease. Therefore, the air blowing efficiency of the motor module 10 as a whole can be improved.

Furthermore, in the embodiment, the upper first communication path 421, the upper second communication path 423, the lower first communication path 431, and the lower second communication path 433 respectively have a crescent shape when the entrance is viewed from one side in the axial direction. In other words, when viewed from one side in the axial direction, each has a shape closed by one straight line (each of the partition units 61 to 64) and one circular arc (inner wall 210 of the main body portion 21). Accordingly, the airflow can further advance to the other side in the axial direction via the communication paths while maintaining the turning in the circumferential direction of the airflow generated by the rotation of the fan 32. As a result, air stagnation on the inside of the casing 20 can be suppressed and the air can be exhausted efficiently.

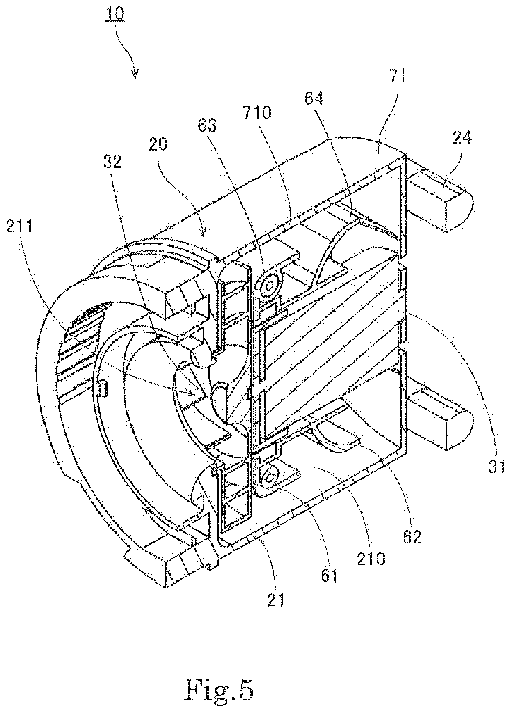

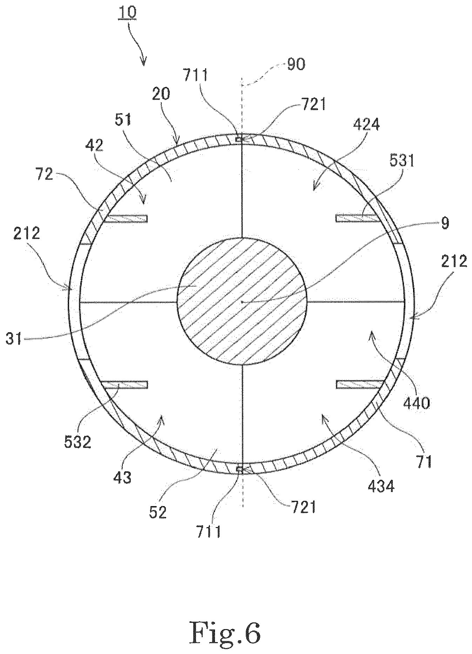

Fig. 5 is a partial sectional perspective view of a part having a flow passage 40 that connects the intake port 211 and the exhaust port 212 to each other in the motor module 10. Fig. 6 is a sectional view taken along line VI-VI of the motor module 10 in Fig. 2. As illustrated in Figs. 5 and 6, the casing 20 of the embodiment is configured with a first casing 71 and a second casing 72 which are two members obtained by dividing the casing 20 by half. The first casing 71 and the second casing 72 are resin molded articles integrally formed respectively. The first casing 71 has a contact surface 710 that comes into contact with the second casing 72 on a plane 90 through the rotating axis 9. Further, the second casing 72 has a contact surface (not illustrated) that comes into contact with the first casing 71 on the plane 90. The casing 20 is configured to have a substantially symmetrical shape with respect to the plane 90. Therefore, the handle portion 22 also has a substantially symmetrical shape with respect to the plane 90.

In this manner, by configuring the casing 20 with two members that divide the casing 20 by half, the assembly efficiency of each component can be improved in a manufacturing process of the motor module 10. In addition, in the first casing 71 and the second casing 72 divided by half, each of the partition units 61 to 64 is disposed perpendicularly to the plane 90. Accordingly, when forming the first casing 71 and the second casing 72 by injection molding, the number of components of molding can be reduced. Therefore, the manufacturing cost can be reduced. In addition, the upper first partition unit 61 and the lower first partition unit 63 may be configured with members formed separately from the first casing 71 and the second casing 72. In addition, the upper second partition unit 62 and the lower second partition unit 64 may be configured with members formed separately from the first casing 71 and the second casing 72.

The first casing 71 has a first projection portion 711 that protrudes from the plane 90 toward the second casing 72 side. The second casing 72 has a first recess portion 721 recessed from the plane 90. The first projection portion 711 is fitted into the first recess portion 721. Accordingly, the first casing 71 and the second casing 72 are stably fixed. The first projection portion 711 and the first recess portion 721 are respectively disposed in the vicinity of the outer surface of the casing 20 and around the handle hole 221.

Further, the first casing 71 has screw fixing holes (not illustrated) formed perpendicularly to the plane 90. The second casing 72 has screw holding holes (not illustrated) formed perpendicularly to the plane 90. A screw thread part of a screw that penetrates the screw holding hole (not illustrated) is screwed to a screw fixing hole (not illustrated). Accordingly, the first casing 71 and the second casing 72 are more stably fixed.

### 2. Modification Example

Above, although the embodiments of the invention have been described as examples, the invention is not limited to the above-described embodiments.

In the above-described embodiment, in total two exhaust ports 212 are provided in the third muffling chamber 440 one by one so as to penetrate the first casing 71 and the second casing 72 that configures the casing 20, respectively. However, the exhaust port 212 may be provided so as to penetrate either one of the first casing 71 or the second casing 72, that is, only one exhaust port may be provided or three or more exhaust ports may be provided.

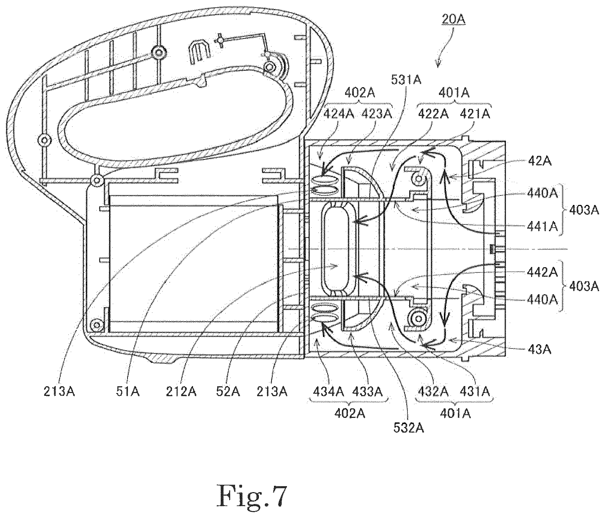

Fig. 7 is a sectional view of a casing 20A according to a modification example. In the casing 20A illustrated in Fig. 7, an exhaust port 212A is provided in a third muffling chamber 440A. In addition, in an upper second muffling chamber 424A and a lower second muffling chamber 434A, exhaust ports 213A are provided, respectively. The exhaust port 212A and the exhaust port 213A are through-holes that communicate with the inside and the outside of the casing 20A, respectively. In addition, the third muffling chamber 440A communicates directly with the exhaust port 212A, and the upper second muffling chamber 424A and the lower second muffling chamber 434A respectively communicates directly with the exhaust port 213A. In addition, in the modification example, the exhaust ports 213A are respectively provided two by two in the upper second muffling chamber 424A and the lower second muffling chamber 434A. However, the number of exhaust ports 213A is not limited thereto.

Furthermore, in the modification example, in the vicinity of the end portion on one side of an upper motor covering unit 531A in the axial direction, an upper third communication path 441A that penetrates at least a part of the upper motor covering unit 531A in the thickness direction is provided. In addition, in the vicinity of the end portion on one side of a lower motor covering unit 532A in the axial direction, a lower third communication path 442A that penetrates at least a part of the lower motor covering unit 532A in the thickness direction is provided. Meanwhile, an end portion on the other side of the upper motor covering unit 531A in the axial direction is connected to the upper wall portion 51A. In addition, an end portion on the other side of the lower motor covering unit 532A in the axial direction is connected to the lower wall portion 52A. Accordingly, the upper second muffling chamber 424A and the lower second muffling chamber 434A are completely partitioned from the third muffling chamber 440A, respectively.

As described above, the third muffling chamber 440A of the modification example communicates with an upper first muffling chamber 422A via the upper third communication path 441A, and does not communicate with the upper second muffling chamber 424A. The third muffling chamber 440A communicates with a lower first muffling chamber 432A via the lower third communication path 442A, and does not communicate with the lower second muffling chamber 434A. In addition, the upper second muffling chamber 424A communicates with the upper first muffling chamber 422A via an upper second communication path 423A. The lower second muffling chamber 434A communicates with the lower first muffling chamber 432A via a lower second communication path 433A. Accordingly, a part of the airflow generated by the rotation of the fan (not illustrated) is discharged from the exhaust port 213A to the outside of the motor module passing through the upper first muffling chamber 422A, the upper second communication path 423A, and the upper second muffling chamber 424A in the upper flow passage 42A, or is discharged from the exhaust port 212A to the outside of the motor module passing through the upper first muffling chamber 422A, the upper third communication path 441A, and the third muffling chamber 440A. In addition, another part of the airflow generated by the rotation of the fan (not illustrated) is discharged from the exhaust port 213A to the outside of the motor module passing through the lower first muffling chamber 432A, the lower second communication path 433A, and the lower second muffling chamber 434A in the lower flow passage 43A, or is discharged from the exhaust port 212A to the outside of the motor module passing through the lower first muffling chamber 432A, the lower third communication path 442A, and the third muffling chamber 440A.

In addition, the flow passage sectional area of the upper first muffling chamber 422A is greater than the flow passage sectional area of an upper first communication path 421A. The flow passage sectional area of the lower first muffling chamber 432A is greater than the flow passage sectional area of a lower first communication path 431A. Accordingly, the upper first communication path 421A and the upper first muffling chamber 422A, and the lower first communication path 431A and the lower first muffling chamber 432A configure a first expansion type muffler 401A, respectively. In addition, the flow passage sectional area of the upper second muffling chamber 424A is greater than the flow passage sectional area of the upper second communication path 423A. The flow passage sectional area of the lower second muffling chamber 434A is greater than the flow passage sectional area of the lower second communication path 433A. Accordingly, the upper second communication path 423A and the upper second muffling chamber 424A, and the lower second communication path 433A and the lower second muffling chamber 434A configure a second expansion type muffler 402A, respectively. Furthermore, the flow passage sectional area of the third muffling chamber 440A is greater than the flow passage sectional area of the upper third communication path 441A. The flow passage sectional area of the third muffling chamber 440 is greater than the flow passage sectional area of the lower third communication path 442A. Accordingly, the upper third communication path 441A and the third muffling chamber 440A, and the lower third communication path 442A and the third muffling chamber 440A configure a third expansion type muffler 403A, respectively. In this manner, by disposing three expansion type mufflers 401A, 402A, and 403A between the fan and the exhaust port 212A respectively in the upper flow passage 42A and the lower flow passage 43A, the noise generated in the fan can be substantially reduced. In addition, since the expansion type mufflers can be configured with a simple structure, it is possible to reduce the number of components and suppress cost while efficiently reducing the noise. In addition, assembly workability can be improved, and production efficiency can be enhanced.

In the embodiments and the modification examples described above, the third muffling chamber communicates with either one of the first muffling chamber or the second muffling chamber via the third communication path. However, the third muffling chamber may communicate with both the first muffling chamber and the second muffling chamber.

In the embodiments and the modification examples described above, the fan is a centrifugal fan, but the invention is not limited thereto. For example, the fan used in the motor module and the vacuum cleaner of the invention may be a mixed flow fan.

In the embodiments and the modification examples described above, on the downstream side of the fan, the flow passage is first branched into two, but the invention is not limited thereto. On the downstream side of the fan, there may be one flow passage. In this case, the flow passage may be an annular flow passage connected in the circumferential direction on the outer side of the motor. In addition, on the downstream side of the fan, the flow passage may be branched into three or more.

Furthermore, the shape of the lower first partition unit may be different from the shape obtained by vertically reversing the upper first partition unit. In addition, the shape of the lower second partition unit may be different from the shape obtained by vertically reversing the upper second partition unit. The flow passage sectional area of the upper flow passage and the flow passage sectional area of the lower flow passage may be different from each other because the lengths in the up-down direction are different from each other.

In the embodiments and the modification examples described above, the upper first communication path and the upper second communication path are disposed along the inner wall of the main body portion, respectively. In addition, the lower first communication path and the lower second communication path are disposed along the inner wall of the main body portion, respectively. However, for example, the upper second communication path may be disposed along the upper motor covering unit. In other words, the upper second partition unit may extend from the part of the inner wall of the main body portion to the inner side in the radial direction and to the other side in the axial direction, on the other side of the upper first partition unit in the axial direction and on one side of the upper wall portion in the axial direction. In addition, the lower second communication path may be disposed along the lower motor covering unit. In other words, the lower second partition unit may extend from the part of the inner wall of the main body portion to the inner side in the radial direction and to the other side in the axial direction, on the other side of the lower first partition unit in the axial direction and on one side of the lower wall portion in the axial direction. Accordingly, the upper first communication path and the upper second communication path are disposed at different positions when viewed in the axial direction. In addition, the lower first communication path and the lower second communication path are disposed at different positions when viewed in the axial direction. In this manner, by shifting the positions in the axial direction of the first communication path and the second communication path in the upper flow passage and the lower flow passage, respectively, the muffling effect of the first expansion type muffler configured with the first communication path and the first muffling chamber can be improved. In other words, the design of the motor module as a whole emphasizes the muffling effect.

In the embodiments and modification examples described above, the upper first partition unit has the upper first plate portion and the upper first bent portion. However, the upper first partition unit may have only the upper first plate portion. In addition, the lower first partition unit has a lower first plate portion and a lower first bent portion. However, the lower first partition unit may have only the lower first plate portion.

The vacuum cleaner of the above-described embodiment is a handy type vacuum cleaner, but the invention is not limited thereto. Similar to the handy type, the motor module of the invention is mounted on an upright type or a stick type vacuum cleaner which suctions gas to the intake port via the intake head and the dust separating unit and discharges the gas from the exhaust port.

Further, the motor module of the invention may be mounted on a so-called canister type vacuum cleaner. In addition to the intake head and the dust separating unit, the canister type vacuum cleaner has a hose portion that connects the intake head and the dust separating unit to each other. The motor module suctions the gas to the intake port via the intake head, the hose portion, and the dust separating unit and discharges the gas from the exhaust port.

Further, the shape of the details of each member may be different from the shape illustrated in each of the drawings of the application. For example, the shapes of each portion of the intake port, the exhaust port, and the wall portion may be different from those of the embodiments and modification examples described above. Further, each of the above-described elements may be appropriately combined within a range in which inconsistency does not occur.

### Industrial Applicability

The invention can be applied to a motor module and a vacuum cleaner. Features of the above-described preferred embodiments and the modifications thereof may be combined appropriately as long as no conflict arises. While preferred embodiments of the present disclosure have been described above, it is to be understood that variations and modifications will be apparent to those skilled in the art without departing from the scope of the present disclosure. The scope of the present disclosure, therefore, is to be determined solely by the following claims.

## Claims

1. A motor module (10) comprising:
a motor (31) having a rotating unit configured to rotate around a rotating axis (9);
a fan (32) which is disposed on one side of the motor (31) in an axial direction and configured to rotate together with the rotating unit; and
a casing (20, 20A) which accommodates the motor (31) and the fan (32) therein,
wherein the casing (20, 20A) includes
a tubular main body portion (21) that extends in the axial direction,
an intake port (211) disposed on one side of the fan (32) in the axial direction,
one or a plurality of exhaust ports (212, 212A) disposed on the other side of the fan (32) in the axial direction and on an outer side of the motor (31) in a radial direction,
a flow passage (40) which is a space that connects the intake port (211) and the exhaust port (212, 212A) to each other between the main body portion (21) and the motor (31), and
a partition unit (60) which is disposed on an inside of the flow passage (40) and partitions the flow passage (40),
wherein the flow passage (40) includes
a fan accommodating unit (41) in which the fan (32) is accommodated and which directly communicates with the intake port (211),
a first muffling chamber (401, 401A) that communicates with the fan accommodating unit (41) via a first communication path (421, 421A),
a second muffling chamber (402, 402A) that communicates with the first muffling chamber (401, 401A) via a second communication path (423, 423A) and directly or indirectly communicates with the exhaust port (212, 212A), and
a third muffling chamber (403, 403A) that communicates with either one of the first muffling chamber (401, 401A) or the second muffling chamber (402, 402A) via a third communication path (441, 441A), and directly or indirectly communicates with the exhaust port (212, 212A),
wherein a flow passage sectional area of the first muffling chamber (401, 401A) is greater than a flow passage sectional area of the first communication path (421, 421A),
wherein a flow passage sectional area of the second muffling chamber (402, 402A) is greater than a flow passage sectional area of the second communication path (423, 423A), and
wherein a flow passage sectional area of the third muffling chamber (403, 403A) is greater than a flow passage sectional area of the third communication path (441, 441A).

2. The motor module (10) according to claim 1,
wherein the motor (31) is disposed in the third muffling chamber (403, 403A).

3. The motor module (10) according to claim 1 or 2,
wherein the exhaust port (212, 212A) is a through-hole which is positioned in the third muffling chamber (403, 403A) and communicates with an outside of the casing (20, 20A), and
wherein the third muffling chamber (403, 403A) communicates with the second muffling chamber (402, 402A) via the third communication path (441, 441A).

4. The motor module (10) according to claim 1 or 2,
wherein the exhaust ports (212, 212A) are through-holes which are respectively positioned in the second muffling chamber (402, 402A) and the third muffling chamber (403, 403A) and respectively communicate with an outside of the casing (20, 20A), and
wherein the third muffling chamber (403, 403A) communicates with the first muffling chamber (401, 401A) via the third communication path (441, 441A) and does not communicate with the second muffling chamber (402, 402A).

5. The motor module (10) according to any one of claims 1 to 4,
wherein the partition unit (60) includes
a plate-like first partition unit (61, 63) disposed between the fan accommodating unit (41) and the first muffling chamber (401, 401A), and
a plate-like second partition unit (62, 64) disposed between the first muffling chamber (401, 401A) and the second muffling chamber (402, 402A).

6. The motor module (10) according to claim 5,
wherein the first partition unit (61, 63) includes
a first plate portion (611) that expands substantially perpendicularly to the axial direction, and
a first bent portion (612) that extends from the first plate portion (611) to the other side in the axial direction.

7. The motor module (10) according to any one of claims 1 to 6,
wherein the first communication path (421, 421A) and the second communication path (423, 423A) are disposed along an inner wall of the main body portion (21), and
wherein the first communication path (421, 421A) and the second communication path (423, 423A) overlap each other in the axial direction, at at least a part.

8. The motor module (10) according to any one of claims 1 to 7,
wherein the casing (20, 20A) further includes a motor covering unit (53) disposed between at least a part of the motor (31) and the main body portion (21), and
wherein the first muffling chamber (401, 401A) and the second muffling chamber (402, 402A) are surrounded by the motor covering unit (53) and the main body portion (21).

9. The motor module (10) according to any one of claims 1 to 8,
wherein the shape of the first communication path (421, 421A) viewed from one side in the axial direction is a shape closed by one straight line and one circular arc.

10. The motor module (10) according to any one of claims 1 to 9,
wherein the casing (20, 20A) includes
a first casing (71) formed integrally, and
a second casing (72) formed integrally, and
wherein the first casing (71) and the second casing (72) have contact surfaces that come into contact with each other on a plane that passes through the rotating axis (9).

11. The motor module (10) according to claim 10,
wherein the first casing (71) has a projection portion that protrudes (711) from the plane to the second casing side,
wherein the second casing (72) has a recess portion (721) recessed from the plane, and
wherein the projection portion (711) is adapted to fit into the recess portion (721).

12. A handy type, upright type, or stick type vacuum cleaner comprising:
an intake head (12);
a dust separating unit (11) configured to separate dust contained in an airflow from the airflow; and
the motor module (10) according to claim 10 or 11,
wherein the casing (20, 20A) includes a handle (22) having a substantially symmetrical shape with respect to the plane, and
wherein the motor module (10) is configured to suck gas to the intake port (211) via the intake head (12) and the dust separating unit (11) and to discharge the gas from the exhaust port (212, 212A).

13. A canister type vacuum cleaner comprising:
an intake head (12);
a dust separating unit (11) configured to separate dust contained in the airflow from the airflow;
a hose portion that connects the intake head (12) and the dust separating unit (11) to each other; and
the motor module (10) according to any one of claims 1 to 11,
wherein the motor module (10) is configured to suck gas to the intake port (211) via the intake head (12), the hose portion, and the dust separating unit (11) and to discharge the gas from the exhaust port (212, 212A).
